# EUROPEAN PATENT SPECIFICATION

(11) **EP 1 293 422 B1**
(45) Date of publication and mention of the grant of the patent: **10.08.2005**
(21) Application number: 01308627.7
(22) Date of filing: 09.10.2001
(51) Int. Cl.: B62J 1/00

(54) **Base of bicycle saddle**
Untergestell für Fahrradsattel
Châssis pour selle de bicyclette

(30) Priority: 13.09.2001 CN 01260844
(43) Date of publication of application: 19.03.2003
(73) Proprietor: Yu, Tsai-Yun, Ta Chia Chen, Taichung Hsien (TW)
(72) Inventor: Yu, Tsai-Yun, Ta Chia Chen, Taichung Hsien (TW)
(74) Representative: Cheyne, John Robert Alexander Mackenzie

(56) References cited:
- US-A- 672 656
- US-A- 5 340 192
- US-A- 6 095 601

## Description

### FIELD OF THE INVENTION

The present invention relates generally to a bicycle saddle, and more particularly to a base of the bicycle saddle, which provides a comfortable feeling to the bicyclist when the bicyclist sits on the saddle.

### BACKGROUND OF THE INVENTION

The conventional bicycle saddle is generally comprised of a rigid base disposed at the bottom side of the saddle, a middle layer made of a foam material and bonded to the top side of the base, and a soft covering layer covered on the middle layer. In addition to the shock absorbing means disposed between the saddle and the seat post of the bicycle, the middle layer of the saddle provides a cushion to buffer the pressure from the bicyclist. Since the base is adapted to support the whole structure of the saddle and acts as a bridge to connect the seat post, it must have certain hardness. In early days, the base is made of metallic material. Nowadays, rigid plastic material is commonly used for the base. Although the rigid base is covered by the middle layer of the foam material, the bicyclist still feels uncomfortable after a long riding. U.S. Pat. No. 6,095,601 discloses an improved base of a bicycle saddle, the base comprises a main body made of a rigid plastic material and provided in the rear portion thereof with two receiving spaces, and an elastic body made of a plastic material which is less rigid than the plastic material of which said main body is made. The elastic body is filled in said receiving spaces by molding so as to provide a shock-absorbing area corresponding in location to the buttocks of a bicyclist, thereby making the saddle rather comfortable to sit on.

The base disclosed in the above U.S. patent has drawbacks. When the bicyclist sits on the saddle, the elastic body is forced to curve inwards, becoming unable to support the bicyclist positively in position. Further, because the elastic body is a sheet-like body and the periphery thereof is fastened to the periphery of the receiving spaces, the center area of the elastic body is suspended from the main body. Therefore, the elastic body tends to be deformed, broken or detached from the main body after long time use.

### SUMMARY OF THE INVENTION

The primary objective of the present invention is to provide a base of a bicycle saddle free from the drawbacks of the prior art described above, i.e. it makes the bicycle saddle rather comfortable to sit on.

It is another objective of the present invention to provide a base of a bicycle saddle to solve the broken and/or detached problems of the elastic body, thereby making the saddle rather durable in use.

According to the present invention there is provided a base of a bicycle saddle, said base comprising:
a main body made of a rigid plastic material and provided with a narrow front portion, a wide rear portion, at least one receiving space disposed in the rear portion corresponding in location to the sitting area of a bicyclist;
at least one elastic body made of a plastic material of hardness smaller than the hardness of the plastic material of which said main body is made, said elastic body being filled in said receiving space by molding,
characterised by a plurality of supporting bars suspended in said receiving space and defining a plurality of hollows in said receiving space,
the hollows being filled with said elastic body by molding, and said supporting bars and said elastic body being interconnected.

Preferred features of the invention are the subject of the dependent claims.

### BRIEF DESCRIPTION OF THE DRAWINGS

FIG. 1 shows an exploded view of a bicycle saddle containing a first preferred embodiment of the present invention.
FIG. 2 shows a top view of the first preferred embodiment of the present invention.
FIG. 3 shows a bottom view of the first preferred embodiment of the present invention.
FIG. 4 shows a sectional view taken along the direction indicated by a line 4-4 as shown in FIG. 2.
FIG. 5 shows a sectional view taken along the direction indicated by a line 5-5 as shown in FIG. 2.
FIG. 6 shows a bottom view of a second preferred embodiment of the present invention.
FIG. 7 shows a bottom view of a third preferred embodiment of the present invention.
FIG. 8 shows a bottom view of a fourth preferred embodiment of the present invention.
FIG. 9 shows a bottom view of a fifth preferred embodiment of the present invention.

### DETAILED DESCRIPTION OF THE INVENTION

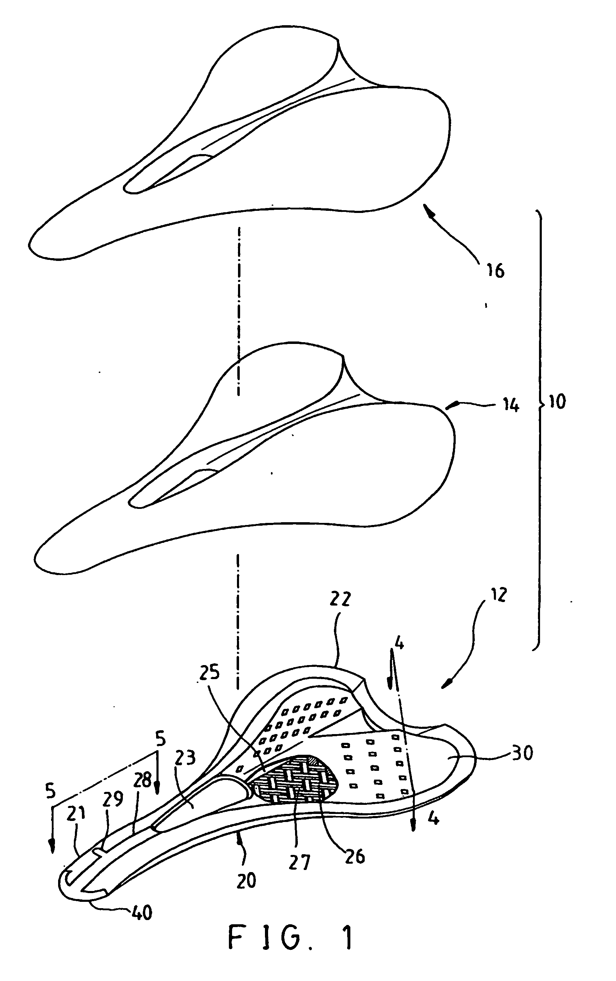

As shown in FIG. 1, a bicycle saddle 10 is formed of a base 12, a middle layer 14 made of a foam material which is bounded on the top side of the base 12, and an outer covering layer 16 covered on the middle layer 14.

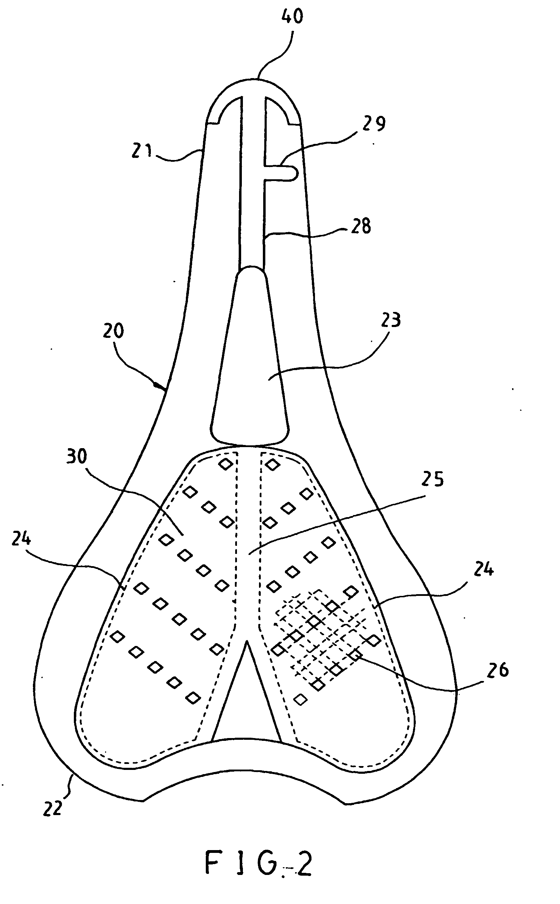

As shown in FIGS. 2-4, the base 12 of the first preferred embodiment of the present invention comprises a main body 20 and an elastic body 30.

The main body 20 is made of a rigid plastic material by molding. Similar to a conventional bicycle saddle, the main body 20 has a triangular shape with a narrower front portion 21 and a relatively wider rear portion 22. The main body 20 is provided with a opening 23 longitudinally extended in the direction from the front portion 21 toward the rear portion 22, two receiving spaces 24 symmetrically disposed in the rear portion 22 of the main body 20 within the area between the opening 23 and the rear end of the rear portion 22 corresponding in location to the bicyclist 's hips, a longitudinal rib 25 longitudinally extended from the rear side of the opening 23 to the rear end of the rear portion 22 within the area between the two receiving spaces 24, and a plurality of supporting bars 26 suspended in the receiving spaces 24. The rib 25 and the supporting bars 26 are formed integral with the main body 20 upon molding of the main body 20.

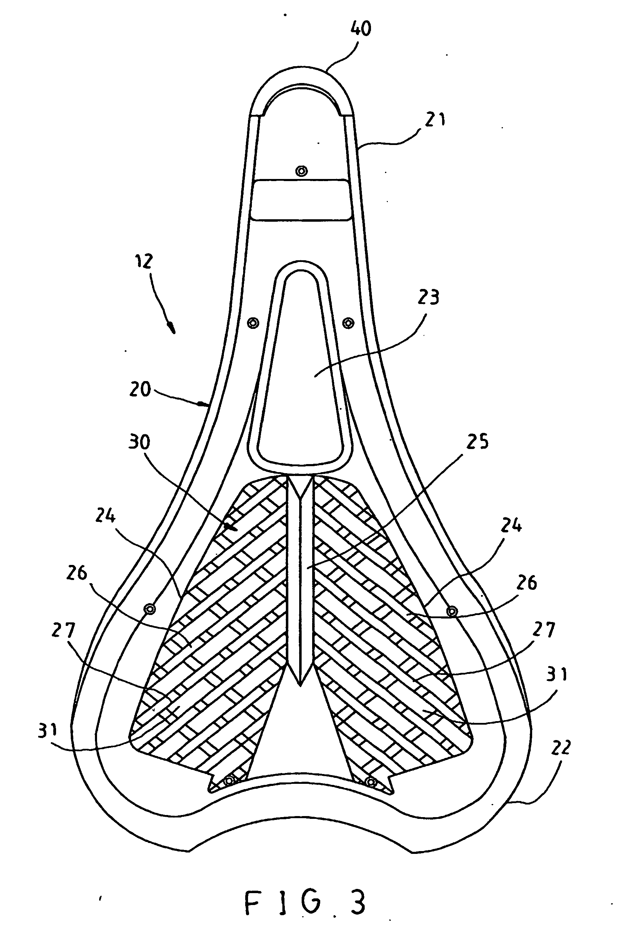

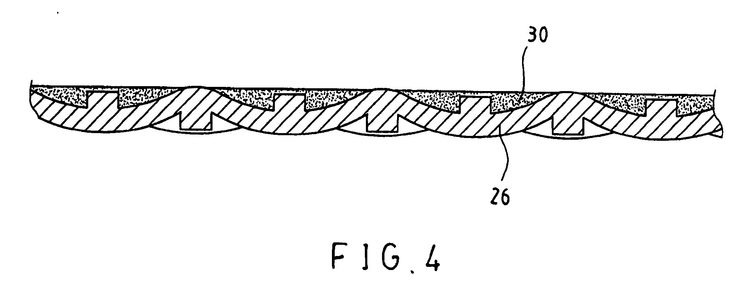

As shown in FIG. 3, the supporting bars 26 form a meshed structure, i.e., a part of the supporting bars 26 extended obliquely leftwards in parallel and the other supporting bars extended obliquely rightwards over the foregoing supporting bars such that a plurality of parallelogram hollows 27 are defined by these supporting bars 26. As shown in FIG. 4, the interconnected portions of the supporting bars 26 are alternatively overlapped one another such that the supporting bars 26 are formed as a cubic knitlike mesh.

The elastic body 30 is directly molded from rubber or the like of hardness lower than the main body 20 on the longitudinal rib 25 and the supporting bars 26 to fill up the receiving spaces 24, keeping in flush with the top surface of the main body 20. The elastic body 30 is bonded to the periphery of each receiving spaces 24 and covered over the rib 25 and the supporting bars 26 to fill up the hollows 27 (leaving a part of the supporting bars 26 to be seen from the top side of the main body 20). When viewed from the bottom side, the bottom side of the elastic body shows meshed-like filling blocks 31.

According to the aforesaid structure, the elastic body 30 and the rigid supporting bars 26 are bonded together in the sitting area of the base 12, namely, the receiving spaces 24. Therefore, the sitting area is relatively softer and more flexible than a rigid plastic base, however it is not excessively soft, i.e., the base 12 has the desired softness and hardness. When installed in the saddle 10, the base 12 supports the saddle 10 in shape and buffers the pressure from the bicyclist, enabling the bicyclist to have a comfortable riding.

Further, because the periphery and center area of the elastic body 30 are respectively bonded to the main body 20 and the supporting bars 26, the connection between the main body 20 and the elastic body 30 is positive. When pressed, downward pressure is evenly distributed through the supporting bars 26, and therefore the elastic body 30 does not break or detach.

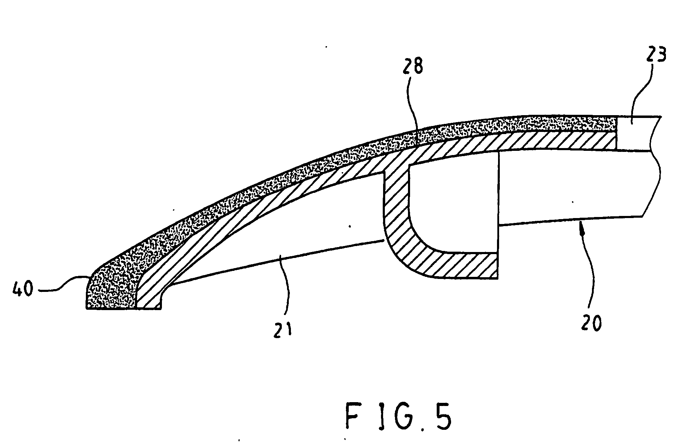

Referring to FIG. 5 and FIGS. 1-3 again, an elastic packing block 40 is molded on the front portion 21 of the main body 20. The material for the elastic packing block 40 is same as for the elastic body 30. The front side edge of the elastic packing block 40 is smoothly arched and covered over the front side edge of the front portion 21 of the main body 20. Therefore, the bicyclist does not feel uncomfortable when moving the hips over the front side of the saddle 10. The main body 20 has a longitudinal groove 28 longitudinally extended from the front end of the front portion 21 to the front side of the longitudinal opening 23, and a transverse groove 29 perpendicularly extended from a middle part of the longitudinal groove 28 toward one lateral side of the main body 20. The elastic packing block 40 fills up the longitudinal groove 28 and the transverse groove 29 when molded on the base 20 so as to provide a firm connection between the elastic packing block 40 and the main body 20.

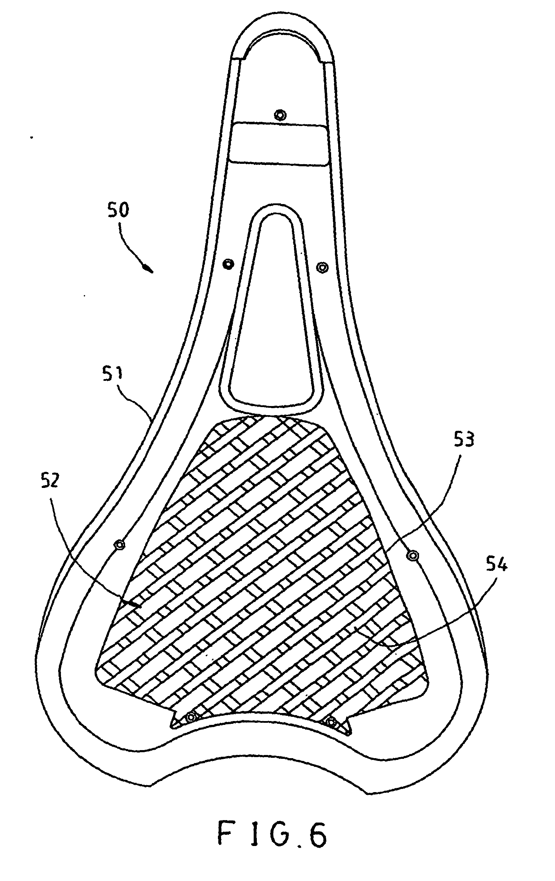

FIG. 6 shows a second preferred embodiment of the present invention. According to this embodiment, the base 50 comprises a rigid main body 51 and an elastic body 52. The main body 51 has only one receiving space 53 disposed in the rear portion thereof corresponding in location to the bicyclist's hips, and meshed supporting bars 54 suspended in the receiving space 53. The elastic body 52 is directly molded from rubber on the supporting bars 54 to fill up the receiving spaces 53.

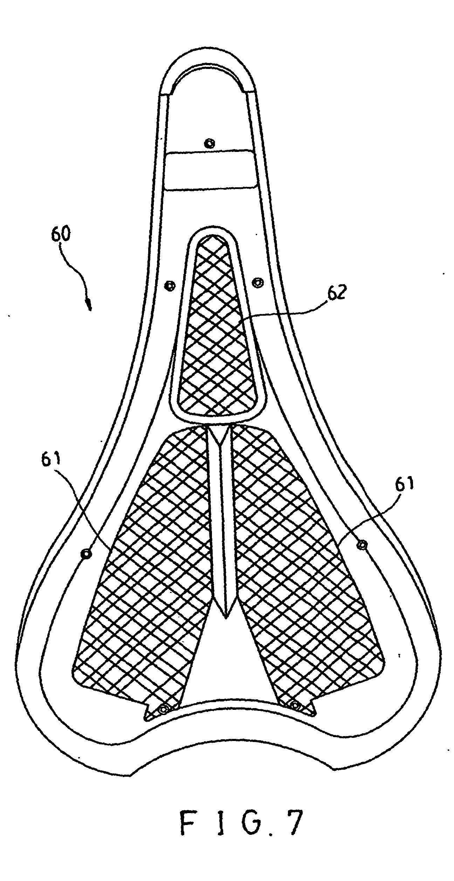

FIG. 7 shows a third preferred embodiment of the present invention. According to this embodiment, the base 60 has two rear receiving spaces 61 bilaterally symmetrically disposed near the rear side and a front receiving space 62 disposed on the middle portion of the base in front of the rear receiving spaces 61. The receiving spaces 61 and 62 can be filled up with one single elastic body, or alternatively filled up with a respective elastic body.

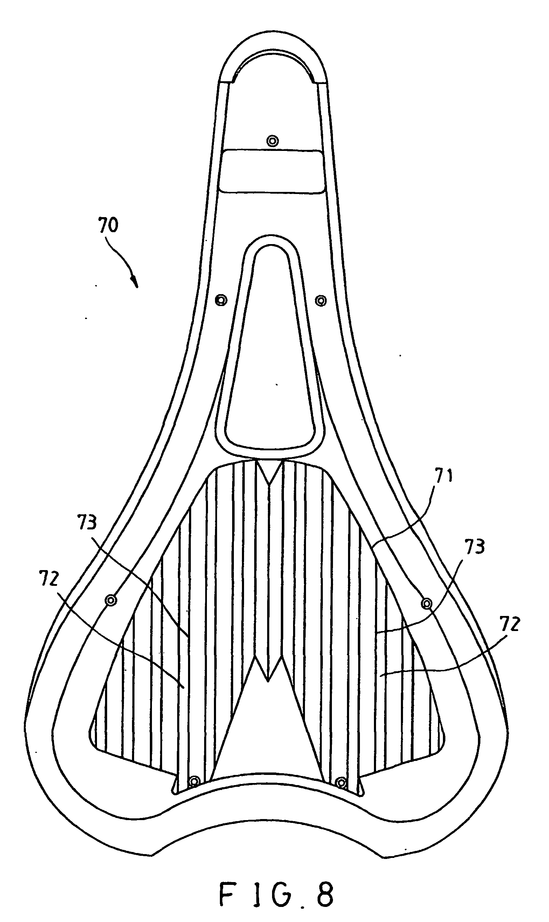

Further, the supporting bars are not limited to the meshed structure as shown in the aforesaid embodiments. In the fourth preferred embodiment of the present invention as shown in FIG. 8, the supporting bars 72 are arranged in parallel in the receiving space 71 of the base 70, defining a plurality of elongated hollows 73. The supporting bars 72 can be extended in longitudinal direction as shown in FIG. 8. Alternatively, the supporting bars 72 can be extended in transverse direction, or obliquely leftwards or rightwards.

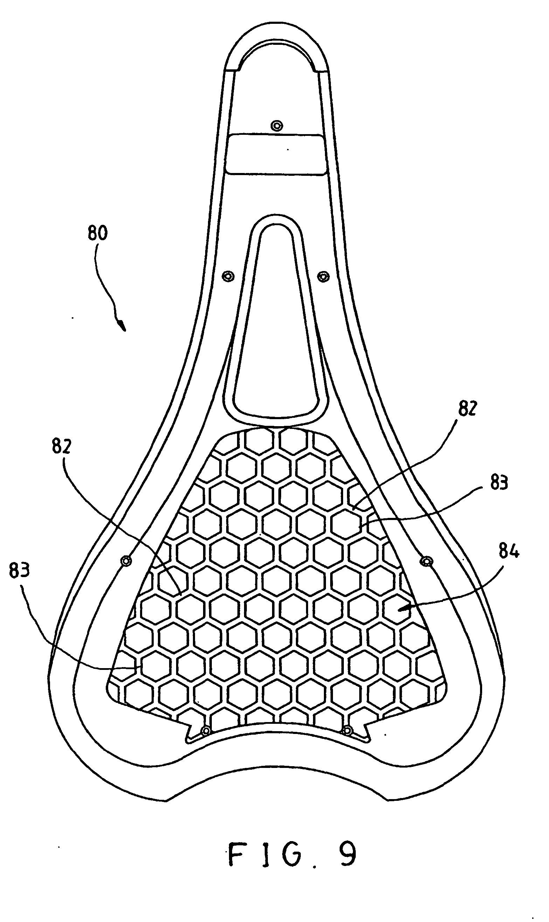

According to the fifth preferred embodiment of the present invention as shown in FIG. 9, the supporting bars 82 in the receiving space 81 form a cellular structure defining a plurality of hexagonal hollows 83, and the elastic body 84 is bonded to the periphery of the receiving space 81 and the supporting bars 82 to fill up the hollows 83. Alternatively, the supporting bars 82 can be arranged so that circular, rectangular, or different shapes of hollows are defined within the receiving space in the sitting area of the base.

Although particular embodiments of the invention has been described in detail for purposes of illustration, various modifications and enhancements may be made without departing from the scope of the invention, which is defined by the appended claims.

## Claims

1. A base (12) of a bicycle saddle (10), said base (12) comprising:
a main body (20) made of a rigid plastic material and provided with a narrow front portion (21), a wide rear portion (22), at least one receiving space (24) disposed in the rear portion (22) corresponding in location to the sitting area of a bicyclist;
at least one elastic body (30) made of a plastic material of hardness smaller than the hardness of the plastic material of which said main body (20) is made, said elastic body (30) being filled in said receiving space (24) by molding,
**characterised by** a plurality of supporting bars (26) suspended in said receiving space (24) and defining a plurality of hollows (27) in said receiving space (24),
the hollows (27) being filled with said elastic body (30) by molding, and said supporting bars (26) and said elastic body (30) being interconnected.

2. A base (12) as claimed in claim 1, wherein said at least one receiving space (24) of said main body (20) has two receiving spaces separated by a longitudinal rib (25) formed integral with said main body (20), said two receiving spaces being disposed in said rear portion (22) respectively.

3. A base (12) as claimed in claim 1, wherein said at least one receiving space (24) of said main body (20) includes only one receiving space disposed in the rear portion (22) covering the left and right sides of the rear portion at the same time.

4. A base (12) as claimed in claim 2, wherein said main body (20) further comprises another receiving space (62) disposed in a middle portion of the main body (20) in front of said at least one receiving space (61).

5. A base (12) as claimed in claim 3, wherein said main body (20) further comprises another receiving space (62) disposed in a middle portion of the main body (20) in front of said at least one receiving space (61).

6. A base (12) as claimed in claim 1, wherein said supporting bars (26) form a meshed structure (54) having said hollows defined therein.

7. A base (12) as claimed in claim 6, wherein the supporting bars (26) alternatively overlap one another such that the supporting bars are formed as a cubic knitlike mesh.

8. A base (12) as claimed in claim 1, wherein said supporting bars (72) are arranged in parallel so as to define said hollows (73) in parallel with elongated shape respectively.

9. A base (12) as claimed in claim 1, wherein said supporting bars (82) form a cellular structure having said hollows (83) defined therein.

10. A base (12) as claimed in claim 1, wherein said main body (20) is further provided with an elastic packing block (40) made of a plastic material of a hardness smaller than the hardness of the plastic material of which the main body (12) is made, said elastic packing block (40) is connected to the front side edge of the front portion (21) of the main body (20), and the front side edge of the elastic package block (40) is smoothly arched.

11. A base (12) as claimed in claim 10, wherein said main body (20) is provided with a groove (28) extending backwards from said narrow front portion (21) and filled up by said elastic packing block (40).

## Patentansprüche

1. Basis (12) eines Fahrradsattels (10), wobei die Basis (12) umfasst:
einen Hauptkörper (20), der aus einem starren Kunststoffmaterial hergestellt ist und ausgestattet ist mit einem engen vorderen Abschnitt (21), einem breiten hinteren Abschnitt (22), wenigstens einem in dem hinteren Abschnitt (22) angeordneten Aufnahmeraum (24), der der Lage der Sitzfläche eines Radfahrers entspricht;
mindestens einen elastischen Körper (30), der aus einem Kunststoffmaterial hergestellt ist, dessen Härte geringer ist, als die Härte des Kunststoffmaterials aus dem der Hauptkörper (20) hergestellt ist, wobei der elastische Körper (30) in dem Aufnahmeraum (24) durch Formgeben eingefügt wird,
**gekennzeichnet durch** eine Anzahl im Aufnahmeraum (24) verteilten, Stützstäben (26), die eine Anzahl Hohlräume (27) in dem Aufnahmeraum (24) ausbilden,
wobei die Hohlräume (27) mit dem elastischen Körper (30) **durch** Formgebung ausgefüllt sind und die Stützstäbe (26) und der elastische Körper (30) miteinander verbunden sind.

2. Basis (12) nach Anspruch 1, wobei der mindestens eine Aufnahmeraum (24) des Hauptkörpers (20) zwei Aufnahmeräume aufweist, die durch einen Längsstreifen (25) getrennt sind, der einstückig mit dem Hauptkörper (20) ausgebildet ist, wobei die beiden Aufnahmeräume im hinteren Abschnitt (22) angeordnet sind.

3. Basis (12) nach Anspruch 1, wobei der mindestens eine Aufnahmeraum (24) des Hauptkörpers (20) nur einen im hinteren Abschnitt (22) angebrachten Aufnahmeraum enthält, der zur gleichen Zeit die linke und die rechte Seite des hinteren Abschnitts bedeckt.

4. Basis (12) nach Anspruch 2, wobei der Hauptkörper (20) zudem einen weiteren Aufnahmeraum (62) umfasst, der in einem mittleren Abschnitt des Hauptkörpers (20) vor dem mindestens einen Aufnahmeraum (61) angeordnet ist.

5. Basis (12) nach Anspruch 3, wobei der Hauptkörper (20) zudem einen weiteren Aufnahmeraum (62) umfasst, der in einem mittleren Abschnitt des Hauptkörpers (20) vor dem mindestens einen Aufnahmeraum (61) angeordnet ist.

6. Basis (12) nach Anspruch 1, wobei die Stützstäbe (26) eine Netzanordnung (54) mit darin ausgebildeten Hohlräumen bilden.

7. Basis (12) nach Anspruch 6, wobei die Stützstäbe (26) wechselweise einander überlappen, so dass die Stützstäbe als räumliches gestricktes Netz ausgebildet sind.

8. Basis (12) nach Anspruch 1, wobei die Stützstäbe (72) parallel angeordnet sind, so dass sie **dadurch** Hohlräume (73) parallel zur sich erstreckenden Form auszubilden.

9. Basis (12) nach Anspruch 1, wobei die Stützstäbe (82) eine zelluläre Anordnung mit darin ausgebildeten Hohlräumen (83) bilden.

10. Basis (12) nach Anspruch 1, wobei der Hauptkörper (20) zudem mit einem elastischen Abdeckungsblock (40) ausgestattet ist, der aus einem Kunststoffmaterial hergestellt ist, dessen Härte geringer ist als die Härte des Kunststoffmaterials, aus dem der Hauptkörper (20) hergestellt ist, wobei der elastische Abdeckungsblock (40) mit der Vorderseitenkante des vorderen Abschnitts (21) des Hauptkörpers (20) verbunden ist und die Vorderseitenkante des elastischen Abdeckungsblocks (40) leicht gewölbt ist.

11. Basis (12) nach Anspruch 10, wobei der Hauptkörper (20) mit einer Vertiefung (28) ausgestattet ist, die sich rückwärts vom engen vorderen Abschnitt (21) erstreckt und durch den elastischen Abdeckungsblock (40) ausgefüllt ist.

## Revendications

1. Base (12) d'une selle de bicyclette (10), ladite base (12) comprenant :
un corps principal (20) en une matière plastique rigide et pourvu d'une partie avant étroite (21), une partie arrière large (22), au moins un espace de réception (24) disposé dans la partie arrière (22) correspondant en emplacement à la zone d'assise d'un cycliste ;
au moins un corps élastique (30) en une matière plastique d'une dureté inférieure à la dureté de la matière plastique dont est réalisé ledit corps principal (20), ledit corps élastique (30) étant rempli dans ledit espace de réception (24) par moulage,
**caractérisée par** une pluralité de barres de support (26) suspendues dans ledit espace de réception (24) et définissant une pluralité de creux (27) dans ledit espace de réception (24),
les creux (27) étant remplis dudit corps élastique (30) par moulage, et lesdites barres de support (26) et ledit corps élastique (30) interconnectés.

2. Base (12) selon la revendication 1, dans laquelle ledit au moins un espace de réception (24) dudit corps principal (20) présente deux espaces de réception séparés par une nervure longitudinale (25) formée de manière solidaire dudit corps principal (20), lesdits deux espaces de réception étant disposés respectivement dans ladite partie arrière (22).

3. Base (12) selon la revendication 1, dans laquelle ledit au moins un espace de réception (24) dudit corps principal (20) ne comporte qu'un seul espace de réception disposé dans la partie arrière (22) recouvrant en même temps les côtés gauche et droit de la partie arrière.

4. Base (12) selon la revendication 2, dans laquelle ledit corps principal (20) comprend, par ailleurs, un autre espace de réception (62) disposé dans une partie centrale du corps principal (20) face audit au moins un espace de réception (61).

5. Base (12) selon la revendication 3, dans laquelle ledit corps principal (20) comprend, par ailleurs, un autre espace de réception (62) disposé dans une partie centrale du corps principal (20) face audit au moins un espace de réception (61).

6. Base (12) selon la revendication 1, dans laquelle lesdites barres de support (26) forment une structure en forme de maille (54) présentant lesdits creux y définis.

7. Base (12) selon la revendication 6, dans laquelle les barres de support (26) se recouvrent alternativement de sorte que les barres de support soient formées sous forme de maille cubique de type tricot.

8. Base (12) selon la revendication 1, dans laquelle lesdites barres de support (72) sont disposées en parallèle, de manière à définir lesdits creux (73) en parallèle respectivement de forme allongée.

9. Base (12) selon la revendication 1, dans laquelle lesdites barres de support (82) forment une structure cellulaire présentant lesdits creux (83) y définis.

10. Base (12) selon la revendication 1, dans laquelle ledit corps principal (20) est pourvu, par ailleurs, d'un bloc de bourrage élastique (40) en une matière plastique d'une dureté inférieure à la dureté de la matière plastique dont est réalisé le corps principal (12), ledit bloc de bourrage élastique (40) étant connecté au bord latéral avant de la partie avant (21) du corps principal (20), et le bord latéral avant du bloc de bourrage élastique (40) étant arqué de manière lisse.

11. Base (12) selon la revendication 10, dans laquelle ledit corps principal (20) est pourvu d'une rainure (28) s'étendant vers l'arrière depuis ladite partie avant étroite (21) et remplie dudit bloc de bourrage élastique (40).
